# FASCICULE DE BREVET EUROPEEN

(11) **EP 2 807 815 B1**
(45) Date de publication et mention de la délivrance du brevet: **07.09.2016**
(21) Numéro de dépôt: 13704180.2
(22) Date de dépôt: 21.01.2013
(51) Int. Cl.: H04L 29/12, H04L 29/06

(54) **SYSTÈME ET PROCÉDÖ DE CONTROLE D'UNE REQUÊTE DNS**
SYSTEM UND VERFAHREN ZUR STEUERUNG EINER DNS-ANFRAGE
SYSTEM AND METHOD FOR CONTROLLING A DNS REQUEST

(30) Priorité: 24.01.2012 FR 1250674
(43) Date de publication de la demande: 03.12.2014
(73) Titulaire: ARS Nova Systems, 44300 Nantes (FR)
(72) Inventeur: MARESCHAL, Yann, 44000 Nantes (FR); ROMEUF, Pierre François, 44150 Ancenis (FR)
(74) Mandataire: Dutreix, Hugues Ours
(86) Numéro de dépôt international: PCT/FR2013/050122
(87) Numéro de publication internationale: WO 2013/110884

(56) Documents cités:
- US-A1- 2007 204 040
- Slavezero: "How to Protect your Kids Online using OpenDNS", PCTechNotes, 17 mars 2009 (2009-03-17), pages 1-14, XP055036972, Extrait de l'Internet: URL:http://pctechnotes.com/how-to-protect- your-kids-online-using-opendns/ [extrait le 2012-09-03]
- Opendns: "Award-Winning Parental Controls", , 2 juillet 2011 (2011-07-02), pages 1-1, XP055036969, Extrait de l'Internet: URL:http://web.archive.org/web/20110702235 449/http://www.opendns.com/home/parentalco ntrols [extrait le 2012-09-03]

## Description

La présente invention concerne de manière générale les systèmes de contrôle de communication.

L'invention concerne plus particulièrement un système de contrôle de communication, par exemple pour le contrôle parental, comprenant un appareil, tel qu'un ordinateur, muni d'un programme émetteur, tel qu'un navigateur internet, apte à émettre une demande d'accès à un nom de domaine à partir de laquelle est générée une requête de résolution de nom de domaine, appelée requête DNS, et un programme de contrôle permettant d'intercepter ladite requête DNS.

On connaît du document US 2009/0157889 un système de contrôle de communication qui permet de résoudre un nom de domaine en filtrant les résultats en fonction de l'identité de l'utilisateur de l'appareil dont est issue la requête DNS.

Cependant, dans cette solution, lorsque le programme émetteur envoie une demande d'accès à un nom de domaine, la requête DNS correspondante est modifiée pour y intégrer une information de contrôle. Ladite requête DNS modifiée est envoyée à un serveur DNS spécifique qui permet de résoudre et de filtrer le nom de domaine demandé en fonction de cette information de contrôle.

Une telle solution qui consiste à modifier la requête DNS en lui ajoutant des informations nécessite d'interférer avec le protocole DNS, ce qui peut rendre le système instable. Le serveur DNS utilisé pour résoudre une telle requête DNS doit également être adapté pour interpréter les informations rajoutées dans la requête DNS, de sorte que ledit serveur DNS utilisé ne peut pas être remplacé en cas d'indisponibilité par un serveur DNS classique pour obtenir le même résultat.

En outre, le fait d'introduire des informations supplémentaires au sein même de la requête DNS, en plus des informations usuelles, à savoir le nom de domaine et l'adresse de l'émetteur, est une solution limitée par la taille de la requête DNS qui doit respecter un format standard prédéfini. La quantité d'informations que l'on peut introduire dans une requête DNS est donc faible.

On connait aussi de l'état de la technique, le document US 2007/204040 qui propose de filtrer et de résoudre des requêtes DNS. Cependant, le système décrit dans ce document ne permet pas de filtrer la réponse DNS par rapport à l'utilisateur de l'appareil. En outre, l'architecture proposée dans ce document n'est pas satisfaisante. En effet, le serveur qui fait office de serveur DNS est interposé entre un serveur qui fait office de serveur d'autorisation et l'appareil, de sorte qu'une indisponibilité du serveur DNS risque de rendre inopérationel le système.

La présente invention a pour but de proposer un nouveau système de contrôle de communication et un procédé correspondant permettant d'intercepter une requête DNS issue d'un programme et de contrôler la réponse associée à cette requête DNS, de manière simple, avec une faible consommation de ressources, et sans risque d'instabilité du système.

A cet effet, l'invention a pour objet un système informatique de contrôle de communication, par exemple de contrôle parental, comprenant un appareil, tel qu'un ordinateur, muni d'un premier programme informatique, tel qu'un navigateur internet, appelé programme émetteur, apte à émettre une demande d'accès à un nom de domaine à partir de laquelle est générée une requête de résolution de nom de domaine, appelée requête DNS,
ledit appareil étant aussi muni d'un deuxième programme informatique, appelé programme de contrôle, permettant d'intercepter ladite requête DNS, caractérisé en ce que ledit programme de contrôle comprend :
- des moyens de communication avec un serveur de résolution de nom de domaine, appelé serveur DNS, configurés pour transmettre ladite requête DNS audit serveur DNS, et recevoir dudit serveur DNS une réponse, appelée réponse DNS, qui comprend l'adresse numérique Internet, appelée adresse IP, correspondant au nom de domaine demandé,
- des moyens de communication avec un autre serveur, appelé serveur d'autorisation, distinct dudit serveur DNS, configurés pour émettre audit serveur d'autorisation une requête d'autorisation, distincte de la requête DNS, comprenant un identifiant de l'utilisateur de l'appareil et le nom de domaine dont la résolution est demandée, et pour recevoir une réponse dudit serveur d'autorisation générée en fonction de l'identifiant de l'utilisateur de l'appareil et du nom de domaine contenus dans la requête d'autorisation,
- des moyens de communication avec ledit programme émetteur configurés pour transmettre audit programme émetteur une adresse IP définie en fonction de la réponse générée par le serveur d'autorisation.

Grâce au programme de contrôle qui permet de communiquer d'une part avec le serveur DNS, et, d'autre part, avec le serveur d'autorisation, le serveur d'autorisation et le serveur DNS peuvent fonctionner indépendamment l'un de l'autre. En particulier, le serveur d'autorisation et le serveur DNS peuvent communiquer avec le programme de contrôle indépendamment l'un de l'autre.

Ainsi, une éventuelle panne du serveur DNS n'affecte pas en soi le fonctionnement du serveur d'autorisation et inversement, ce qui permet de remplacer un éventuel serveur DNS non disponible, par un autre sans risque de dysfonctionnement. A l'inverse, la solution décrite dans le document US 2007/204040 prévoit d'interposer un serveur formant serveur DNS entre le serveur formant serveur d'autorisation et l'appareil de l'utilisateur. Il résulte d'une telle architecture qu'un dysfonctionnement du serveur DNS empêche le fonctionnement du serveur d'autorisation. En outre comme détaillé ci-après, la solution décrite dans le document US2007/204040 ne permet pas d'identifier l'utilisateur de l'appareil et donc de répondre au programme émetteur en fonction de cet identifiant utilisateur.

Le fait de transmettre au serveur DNS la requête DNS interceptée sans la modifier permet d'utiliser un serveur DNS classique existant pour résoudre le nom de domaine demandé et donc d'utiliser le serveur DNS qui était configuré dans l'agent DNS d'origine de l'appareil.

Le système selon l'invention sépare ainsi la fonction de résolution de nom de domaine de la fonction d'autorisation d'accès à ce nom de domaine, ce qui permet de contrôler l'accès d'un programme à un nom de domaine sans avoir à ajouter de paramètre dans la requête DNS, ce qui nécessiterait d'interférer avec le protocole DNS.

La solution selon l'invention permet ainsi de s'exempter de la gestion d'un serveur DNS dédié à des requêtes DNS particulières modifiées.

En particulier, si le serveur DNS utilisé par le système selon l'invention est indisponible, un autre serveur DNS classique peut prendre le relais pour résoudre le nom de domaine demandé, ce qui n'est pas le cas de la solution décrite dans le document US 2009/0157889 pour laquelle seul un serveur DNS spécifique peut être utilisé pour interpréter l'information de contrôle contenue dans la requête DNS modifiée.

Le fait d'intégrer dans la requête d'autorisation un identifiant de l'utilisateur de l'appareil permet de vérifier si l'accès au nom de domaine demandé dans la requête DNS est autorisé et de filtrer la réponse DNS en conséquence.

Le fait que ce paramètre d'identification soit celui de l'utilisateur de l'appareil permet de filtrer de manière fiable, et adaptée à l'utilisateur, le résultat de la résolution de nom de domaine, contrairement à une solution qui utiliserait la l'adresse IP de l'appareil pour réaliser un tel filtrage. En effet, l'adresse IP d'un appareil est susceptible d'être modifiée ou d'être commune à plusieurs appareils ou encore peut être masquée derrière un routeur, et n'est donc pas nécessairement caractéristique d'un utilisateur.

En séparant la résolution de la requête DNS du filtrage de l'accès au nom de domaine demandé, le système selon l'invention permet de conditionner la demande d'autorisation à l'identification de l'utilisateur de sorte que le serveur d'autorisation peut être configuré pour ne traiter que les requêtes d'autorisation qui comprennent un identifiant reconnu et ainsi ne pas avoir à répondre à toute requête comme doit le faire le serveur DNS.

La charge de la résolution est ainsi supportée par le serveur DNS classique et le serveur d'autorisation du système selon l'invention supporte une charge d'analyse limitée aux requêtes des utilisateurs qui adhèrent au service de contrôle proposé.

Enfin, à l'inverse de la solution du document US 2009/0157889 qui prévoit d'intégrer des informations supplémentaires dans la requête DNS, la solution selon l'invention, permet de faire passer un grand nombre d'informations puisque la requête d'autorisation est émise en plus de la requête DNS et n'obéit pas au standard DNS.

L'invention est définie par les revendications indépendantes suivants.

Selon une caractéristique avantageuse de l'invention, lesdits moyens de communication avec ledit programme émetteur sont configurés pour :
- lorsque la réponse générée par le serveur d'autorisation correspond à une autorisation d'accès au nom de domaine demandé, transmettre audit programme émetteur l'adresse IP contenue dans la réponse DNS générée par le serveur DNS,
- lorsque la réponse générée par le serveur d'autorisation correspond à une interdiction d'accès au nom de domaine demandé, transmettre audit programme émetteur une adresse IP autre que l'adresse IP contenue dans la réponse DNS générée par le serveur DNS.

Selon une caractéristique avantageuse de l'invention, lorsque ledit programme émetteur est un navigateur internet, ladite autre adresse IP transmise au navigateur internet est l'adresse IP d'une page configurée pour exécuter des instructions permettant d'afficher des informations sélectionnées en fonction de l'identifiant de l'utilisateur.

A cet effet, le programme de contrôle comprend un service de type serveur web local qui permet de fournir à ladite page l'identifiant de l'utilisateur de l'appareil et d'afficher par redirection des informations associées audit utilisateur.

Selon une caractéristique avantageuse de l'invention, ledit programme de contrôle comprend en outre des moyens d'analyse des requêtes DNS interceptées pour distinguer les requêtes, dites primaires, déclenchées par l'utilisateur de l'appareil, des requêtes, dites secondaires, ne résultant pas d'une action directe de l'utilisateur,
et, si ladite requête DNS interceptée est une requête secondaire, lesdits moyens de communication avec ledit serveur d'autorisation sont configurés pour ne pas émettre de requête d'autorisation, et lesdits moyens de communication avec le programme émetteur sont configurés pour transmettre audit programme émetteur l'adresse IP contenue dans la réponse DNS générée par le serveur DNS.

L'analyse des requêtes DNS interceptées permet de distinguer les requêtes DNS primaires correspondant aux noms de domaine de sites réellement visités par rapport aux requêtes secondaires qui sont émises automatiquement lors du chargement de la page du site correspondant à la requête primaire. Le fait de différencier les requêtes primaires des requêtes secondaires permet de s'exempter de requêtes d'autorisation dans le cas de requêtes secondaires de manière à ne pas surcharger le serveur d'autorisation.

Une telle analyse des requêtes secondaires et primaires permet de faire moins d'analyses d'autorisation, effectuées par le serveur d'autorisation du système selon l'invention, que de résolutions, effectuées par le serveur DNS classique, et ainsi de limiter la charge supportée par le serveur d'autorisation et de réduire le temps de réponse au programme émetteur.

Selon une caractéristique avantageuse de l'invention, lesdits moyens d'analyse des requêtes DNS interceptées sont configurés pour distinguer les requêtes primaires des requêtes secondaires,
en fonction du temps écoulé entre la requête DNS analysée et la dernière commande de l'utilisateur,
et/ou en fonction de l'intervalle de temps entre la requête DNS analysée et la précédente requête primaire,
et/ou en fonction de la taille de la page d'accueil du nom de domaine demandé dans la requête DNS analysée.

Selon une caractéristique avantageuse de l'invention, ledit programme de contrôle comprend un cache dans lequel sont mémorisées les réponses DNS correspondant auxdites requêtes DNS résolues par le serveur DNS,
et, si la réponse DNS, correspondant à la requête DNS interceptée, est déjà présente dans le cache, lesdits moyens de communication avec le programme émetteur sont configurés pour transmettre audit programme émetteur l'adresse IP contenue dans ladite réponse DNS mémorisée dans le cache.

L'utilisation d'un cache pour mémoriser les réponses associées aux noms de domaine qui ont déjà été résolus permet d'économiser des ressources.

Selon une caractéristique avantageuse de l'invention, lesdits moyens de communication avec le serveur d'autorisation sont aussi configurés pour émettre une requête d'autorisation comprenant un identifiant dudit programme émetteur,
et ledit serveur d'autorisation est aussi configuré pour générer une réponse à cette requête d'autorisation en fonction de l'identifiant du programme émetteur.

Selon une caractéristique avantageuse de l'invention, ledit appareil comprend un agent DNS, appelé agent DNS d'origine, qui permet de générer une requête selon le protocole DNS pour demander à un serveur DNS de résoudre le nom de domaine auquel le programme émetteur souhaite se connecter,
ledit programme de contrôle comprend un agent de configuration qui permet de mémoriser l'adresse du serveur DNS, appelé serveur DNS d'origine, configurée dans l'agent DNS d'origine de l'appareil et de reconfigurer ledit agent DNS d'origine pour diriger les requêtes DNS vers lesdits moyens de communication du programme de contrôle,
l'agent de configuration étant aussi programmé pour paramétrer les moyens de communication du programme de contrôle en définissant ledit serveur DNS d'origine comme étant le serveur DNS à utiliser pour la résolution des requêtes DNS interceptées.

L'invention concerne également une installation comprenant un système tel que décrit ci-dessus et un serveur d'autorisation apte à transmettre au programme de contrôle une réponse à la requête d'autorisation en fonction de l'identifiant de l'utilisateur de l'appareil et du nom de domaine contenus dans la requête d'autorisation,
caractérisée en ce que ledit serveur d'autorisation comprend une base de données formée de noms de domaines associés à des identifiants d'utilisateurs, et des moyens d'analyse permettant de déterminer, à partir de cette base de données, si l'accès au nom de domaine contenu dans la requête d'autorisation est autorisé pour l'identifiant d'utilisateur contenu dans ladite requête.

Selon une caractéristique avantageuse de l'invention, le serveur d'autorisation comprend des moyens de cryptage de la réponse générée par le serveur d'autorisation, et lesdits moyens de communication avec le serveur d'autorisation comprennent des moyens de décryptage de ladite réponse.

Inversement, lesdits moyens de communication avec le serveur d'autorisation comprennent des moyens de cryptage de la requête d'autorisation et le serveur d'autorisation comprend des moyens de décryptage de ladite requête d'autorisation.

L'invention concerne également un procédé de contrôle d'échange de données, par exemple de contrôle parental, entre :
- un premier programme informatique, tel qu'un navigateur internet, appelé programme émetteur, installé sur un appareil, tel qu'un ordinateur, et apte à émettre une demande d'accès à un nom de domaine à partir de laquelle est générée une requête de résolution de nom de domaine, appelée requête DNS,
- un serveur de résolution de nom de domaine, appelé serveur DNS,
- un autre serveur, appelé serveur d'autorisation, distinct dudit serveur DNS, caractérisé en ce que ledit procédé comprend les étapes suivantes :
   - interception par un deuxième programme, appelé programme de contrôle, de ladite requête DNS,
   - transfert par le programme de contrôle de ladite requête DNS au serveur DNS,
   - réception par le programme de contrôle d'une réponse DNS générée par ledit serveur DNS et comprenant une adresse numérique Internet, appelée adresse IP, qui correspond au nom de domaine demandé,
   - transmission par le programme de contrôle audit serveur d'autorisation d'une requête d'autorisation, distincte de la requête DNS, comprenant un identifiant de l'utilisateur de l'appareil et le nom de domaine dont la résolution est demandée,
   - réception par le programme de contrôle d'une réponse générée par le serveur d'autorisation en fonction de l'identifiant de l'utilisateur de l'appareil et du nom de domaine contenus dans la requête d'autorisation,
   - transmission par le programme de contrôle audit programme émetteur d'une adresse IP définie en fonction de la réponse générée par le serveur d'autorisation.

La transmission au programme émetteur d'une adresse IP s'effectue par l'intermédiaire de la transmission audit programme émetteur d'une réponse DNS contenant ladite adresse IP. Cette réponse DNS correspond à celle générée par le serveur DNS et éventuellement modifiée pour remplacer par une autre adresse IP, l'adresse IP correspondant au nom de domaine résolu par le serveur DNS, en cas de réponse négative du serveur d'autorisation. La réponse DNS transmise audit programme émetteur peut également comprendre un paramètre de durée de vie modifié par rapport à celui contenu dans la réponse DNS générée par le serveur DNS.

Selon une caractéristique avantageuse de l'invention, le contenu de la réponse du serveur d'autorisation dépend d'une étape d'analyse qui détermine si l'accès au nom de domaine contenu dans la requête d'autorisation est autorisé pour l'identifiant d'utilisateur contenu dans ladite requête d'autorisation.

Selon une caractéristique avantageuse de l'invention :
- lorsque la réponse générée par le serveur d'autorisation correspond à une autorisation d'accès au nom de domaine demandé, l'adresse IP transmise audit programme émetteur est l'adresse IP contenue dans la réponse DNS générée par le serveur DNS,
- lorsque la réponse générée par le serveur d'autorisation correspond à une interdiction d'accès au nom de domaine demandé, l'adresse IP transmise audit programme émetteur est une adresse IP autre que l'adresse IP contenue dans la réponse DNS générée par le serveur DNS.

Selon une caractéristique avantageuse de l'invention, ledit procédé comprend une étape d'analyse des requêtes DNS interceptées pour distinguer les requêtes, dites primaires, déclenchées par l'utilisateur, des requêtes, dites secondaires, ne résultant pas d'une action directe de l'utilisateur,
et, si ladite requête DNS analysée est une requête secondaire, aucune requête d'autorisation associée à cette requête secondaire n'est émise, et l'adresse IP contenue dans la réponse DNS générée par le serveur DNS est transmise audit programme émetteur.

Selon une caractéristique avantageuse de l'invention, ledit appareil comprenant un agent DNS, appelé agent DNS d'origine, qui permet de générer une requête selon le protocole DNS pour demander à un serveur DNS de résoudre le nom de domaine auquel le programme émetteur souhaite se connecter, ledit programme de contrôle comprend un agent de configuration qui mémorise l'adresse du serveur DNS, appelé serveur DNS d'origine, configurée dans l'agent DNS d'origine de l'appareil et reconfigure ledit agent DNS d'origine pour diriger les requêtes DNS vers lesdits moyens de communication du programme de contrôle, l'agent de configuration paramétrant aussi les moyens de communication du programme de contrôle en définissant ledit serveur DNS d'origine comme étant le serveur DNS à utiliser pour la résolution des requêtes DNS interceptées.

L'invention concerne également un programme d'ordinateur, par exemple pour le contrôle parental, comprenant des instructions de code de programme pour l'exécution des étapes du procédé tel que décrit ci-dessus, lorsque ledit programme est exécuté sur un ordinateur.

L'invention sera bien comprise à la lecture de la description suivante d'exemples de réalisation, en référence aux dessins annexés dans lesquels :
- la figure 1 est une vue schématique de l'installation selon l'invention dans laquelle sont représentés les échanges de données entre l'appareil muni du programme de contrôle, le serveur DNS et le serveur d'autorisation dans le contexte d'une réponse positive du serveur d'autorisation ;
- la figure 2 est une vue de l'installation de la figure 1 dans le contexte d'une réponse négative dudit serveur d'autorisation.

En référence aux figures et comme rappelé ci-dessus, l'invention concerne un système de contrôle de communication. Le système selon l'invention trouve une application particulièrement avantageuse dans le domaine du contrôle parental.

Ledit système comprend un appareil 2, tel qu'un ordinateur personnel, une tablette, un téléphone intelligent ou encore une console de jeux. De manière plus générale, ledit appareil 2 se présente sous la forme d'un système électronique et informatique équipé d'un système d'exploitation permettant de commander l'exécution de programmes. Ledit appareil 2 est muni de moyens de connexion internet pour communiquer avec des serveurs 4, 5 externes comme détaillé ci-après.

Ledit appareil 2 comprend un programme 3, tel qu'un navigateur internet, apte à émettre une demande d'accès à un nom de domaine. Ledit programme 3 est appelé programme émetteur. L'accès à un nom de domaine nécessite un système d'adressage par domaines, encore appelé DNS pour Domain Name System en anglais, qui est un système de bases de données et de serveurs assurant la correspondance entre les noms de domaine ou de site (correspondant à des serveurs hébergeant le contenu dudit site) utilisés par les internautes et les adresses numériques utilisables par les ordinateurs.

Ledit appareil 2 comprend un agent DNS (non représenté), appelé agent DNS d'origine, qui permet de générer une requête selon le protocole DNS pour demander à un serveur DNS de résoudre le nom de domaine auquel le programme émetteur 3 souhaite se connecter, c'est-à-dire de trouver l'adresse IP correspondant audit nom de domaine. Avantageusement, ledit agent DNS d'origine est présent sur l'appareil avant que le programme de contrôle ne soit installé.

Ledit appareil 2 est aussi muni d'un programme de contrôle 1, de préférence résident, qui permet d'intercepter ladite requête DNS et de contrôler la réponse DNS correspondante comme détaillé ci-après.

Dans la suite de la description, ledit programme 3 émetteur qui demande la résolution d'un nom de domaine est un navigateur internet. Bien entendu, ce programme pourrait également être un autre type de programme, tel qu'un client mail ou un client de messagerie instantanée.

Le programme de contrôle 1 comprend des moyens de communication 11 avec un serveur 4 externe de résolution de nom de domaine, appelé serveur DNS 4.

En particulier, le programme de contrôle 1 comprend un agent de configuration qui permet de mémoriser l'adresse du serveur DNS, appelé serveur DNS d'origine, configuré dans l'agent DNS d'origine de l'appareil et de reconfigurer ledit agent DNS d'origine pour diriger les requêtes DNS vers lesdits moyens de communication 11 du programme de contrôle 1. L'agent de configuration paramètre les moyens de communication 11 du programme de contrôle en définissant ledit serveur DNS d'origine comme étant le serveur DNS 4 à utiliser pour la résolution des requêtes DNS interceptées.

A l'inverse, la solution du document US 2009/0157889 modifie la requête DNS pour ajouter un paramètre au sein de cette requête DNS, ce qui nécessite un serveur DNS spécifique configuré pour interpréter cette requête DNS modifiée et ne permet donc pas de conserver le serveur DNS configuré dans l'agent DNS d'origine de l'appareil.

Le serveur d'autorisation peut fonctionner de manière autonome par rapport au serveur DNS. En particulier dans l'exemple illustré aux figures, le serveur DNS et le serveur d'autorisation ne communiquent pas l'un avec l'autre, mais communiquent chacun avec le programme de contrôle. A l'inverse, le système décrit dans le document 2007/204040 rend le serveur qui fait office de serveur d'autorisation dépendant du serveur qui fait office de serveur DNS du fait du positionnement du serveur DNS entre l'appareil et le serveur formant serveur d'autorisation, de sorte que si le serveur DNS est indisponible le serveur d'autorisation est inopérationel.

L'agent de configuration des moyens de communication 11 est aussi configuré pour, en cas de désinstallation du programme de contrôle 1, reparamétrer l'agent DNS d'origine de l'appareil avec ledit serveur DNS d'origine.

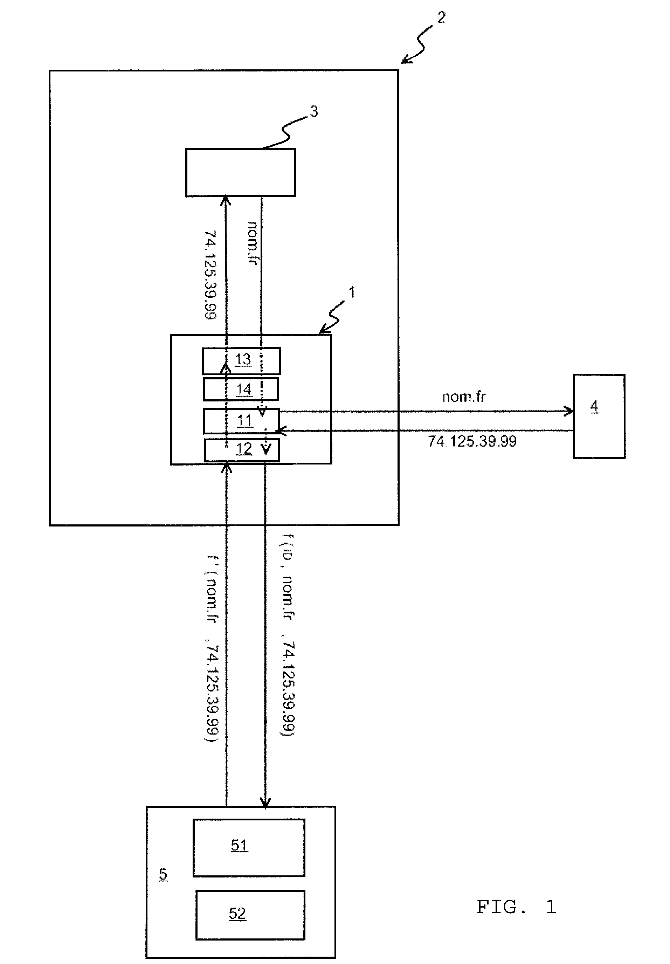

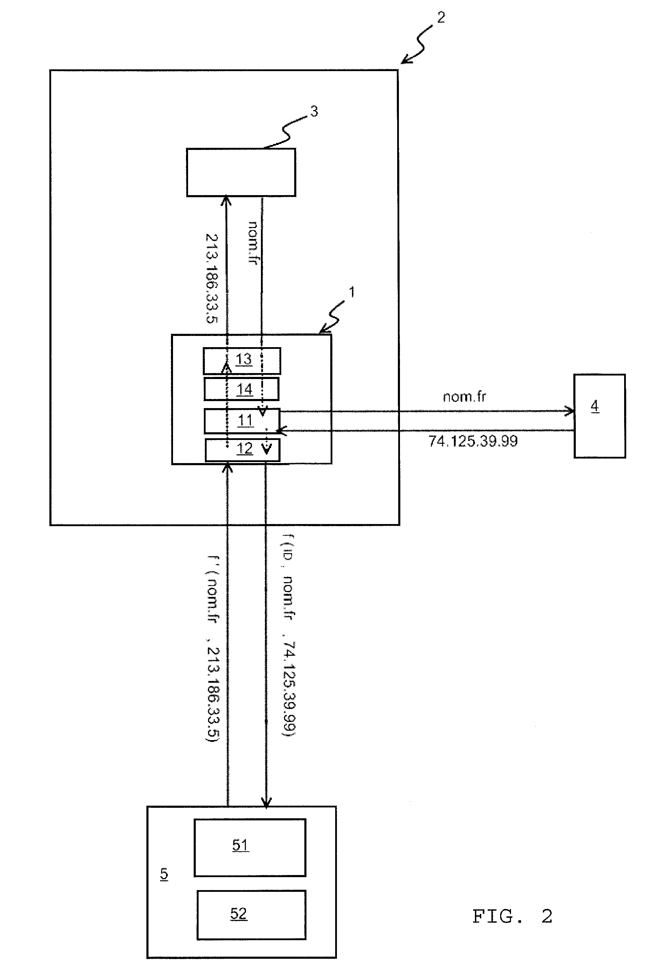

Ainsi, lesdits moyens de communication 11 transmettent la requête DNS interceptée audit serveur DNS 4. Dans l'exemple illustré aux figures, la requête DNS transférée par les moyens de communication 11 à destination du serveur DNS 4 n'est pas modifiée par rapport à celle interceptée, au sens où aucun paramètre supplémentaire n'est introduit dans la requête DNS transmise audit serveur DNS 4. Dans l'exemple illustré aux figures 1 et 2, le nom de domaine contenu dans cette requête est nom.fr où le terme "nom" est le radical du nom de domaine demandé.

Comme détaillé ci-après, la transmission de cette requête DNS au serveur DNS 4 peut être conditionnée aux informations contenues dans un cache 14 dudit programme de contrôle 1.

Lesdits moyens de communication 11 permettent aussi de recevoir, et ainsi d'intercepter, la réponse DNS générée par le serveur DNS 4 qui comprend l'adresse IP correspondant au nom de domaine demandé. Dans l'exemple illustré à la figure 1, l'adresse IP correspondant audit nom de domaine nom.fr est 74.125.39.39.

Le serveur DNS 4 qui reçoit ainsi la requête DNS de la part du programme de contrôle 1, résout le nom de domaine associé et renvoie l'adresse IP correspondante aux moyens de communication 11 du programme de contrôle 1. Ainsi, le programme de contrôle 1 présente dans ces étapes-là une fonction de client ou agent proxy DNS puisqu'il joue le rôle d'un agent DNS et s'interpose entre l'agent DNS d'origine (non représenté) de l'appareil 2 et le serveur DNS 4.

Ainsi, comme détaillé ci-après le programme de contrôle 1 peut contrôler les réponses DNS du serveur DNS 4 externe, tout en conservant l'utilisation du serveur DNS tel que défini à l'origine dans l'agent DNS d'origine de l'appareil, pour résoudre le nom de domaine demandé.

Le programme de contrôle 1 comprend aussi des moyens de communication 12 avec un autre serveur 5 externe, appelé serveur d'autorisation, distinct dudit serveur DNS 4.

Lesdits moyens de communication 12 sont configurés pour émettre audit serveur d'autorisation 5 une requête d'autorisation comprenant un identifiant ID de l'utilisateur de l'appareil et le nom de domaine dont la résolution est demandée via ladite requête DNS. Cette requête d'autorisation est distincte de la requête DNS résolue par le serveur DNS 4. Ladite requête d'autorisation permet de demander une autorisation d'accès au nom de domaine correspondant à ladite requête DNS, compte tenu de l'identifiant ID de l'utilisateur.

Cet identifiant ID de l'utilisateur de l'appareil comprend une donnée caractéristique de l'utilisateur, telle que l'identifiant de session associé à l'utilisateur lorsqu'il ouvre une session sur l'appareil 2. Préférentiellement, l'identifiant ID de l'utilisateur de l'appareil comprend en outre une donnée caractéristique de l'appareil 2 utilisé, telle que l'adresse MAC (MAC pour Médium Access Control), et/ou une donnée caractéristique du programme de contrôle 1, telle qu'un numéro d'enregistrement ou d'inscription associé audit programme de contrôle installé sur l'appareil 2.

Ainsi, l'identifiant ID de l'utilisateur de l'appareil peut être formé par une combinaison de plusieurs données.

Cet identifiant ID est différent de l'adresse IP de l'appareil 2 ou d'un routeur derrière lequel est susceptible de se trouver ledit appareil 2, ce qui permet de filtrer les réponses DNS en fonction de l'identité de l'utilisateur dudit appareil, et offre ainsi un contrôle fiable de l'accès aux noms de domaine. En effet, ledit appareil 2 peut être utilisé par différents utilisateurs qui auront chacun leur identifiant et donc potentiellement des règles d'accès différentes. Ledit utilisateur peut aussi utiliser différents appareils auquel cas il est prévu de pouvoir définir les différents identifiants comme étant ceux d'un même utilisateur pour que les mêmes règles soient appliquées par le serveur d'autorisation à ces identifiants.

Avantageusement, les informations échangées entre le programme de contrôle 1 et le serveur d'autorisation 5 sont chiffrées, par exemple selon le protocole HTTPS (pour HyperText Transfer Protocol Secured en anglais). Ainsi, un tiers ne peut pas déterminer le filtrage associé à un nom de domaine pour un utilisateur du programme de contrôle.

Ledit serveur d'autorisation 5 génère une réponse en fonction de l'identifiant ID de l'utilisateur de l'appareil et du nom de domaine contenus dans la requête d'autorisation. Cette réponse correspond à une autorisation ou à une interdiction d'accès au nom de domaine résolu.

A cet effet, ledit serveur d'autorisation 5 comprend une base de données 52 formée de noms de domaines associés à des identifiants d'utilisateurs avec autorisation ou non pour ces identifiants d'utilisateurs d'accéder au nom de domaine correspondant. Avantageusement, cette base de données est mise à jour régulièrement à l'aide d'un programme d'analyse et de classification des noms de domaines.

Ledit serveur d'autorisation 5 comprend aussi des moyens d'analyse 51 permettant de déterminer, à partir de cette base de données, si le nom de domaine contenu dans la requête d'autorisation est autorisé pour l'identifiant d'utilisateur contenu dans ladite requête.

Le programme de contrôle 1 comprend aussi des moyens de communication 13 avec ledit programme émetteur 3 pour transmettre audit programme émetteur 3 une adresse IP définie en fonction de ladite réponse du serveur d'autorisation 5.

On peut prévoir que pour une réponse positive, la réponse transmise au programme de contrôle 1 contient l'adresse IP du nom de domaine résolu. Dans l'exemple illustré à la figure 1 cette adresse IP est 74.125.39.39.

A l'inverse pour une réponse négative, on peut prévoir que la réponse transmise au programme de contrôle 1 contient une adresse IP d'une page à travers laquelle est appelée une application configurée pour afficher des informations fonctions de l'identifiant de l'utilisateur. Dans l'exemple illustré à la figure 2 cette adresse IP est 213.186.33.5.

Dans l'exemple illustré aux figures 1 et 2, la requête d'autorisation comprend outre le nom de domaine requis et l'identifiant de l'utilisateur ID, l'adresse IP correspondant au nom de domaine résolu par le serveur DNS 4. Une telle conception de la requête d'autorisation simplifie les échanges entre le programme de contrôle 1 et le serveur d'autorisation 5 puisqu'en cas de réponse positive, le serveur d'autorisation 5 retourne simplement ladite adresse IP au programme de contrôle 1 qui la transmet, via les moyens de communication 13, au programme émetteur 3.

En variante, on peut prévoir de ne pas intégrer l'adresse IP correspondant au nom de domaine résolu dans la requête d'autorisation, ce qui permet de transmettre simultanément la requête DNS et la requête d'autorisation aux serveurs respectifs 4 et 5. Dans ce cas la réponse du serveur d'autorisation 5 comprend une information interprétée par le programme de contrôle 1 comme positive ou négative et ledit programme de contrôle 1, par exemple via lesdits moyens de communication 13, transmet au programme émetteur 3 l'adresse IP correspondant au nom de domaine résolu par le serveur DNS 4 en cas de réponse positive ou une autre adresse IP en cas de réponse négative.

Ledit programme de contrôle comprend un cache 14 dans lequel sont mémorisées les réponses DNS associées aux requêtes DNS résolues par le serveur DNS 4. Chaque réponse DNS comprend une adresse IP et une ou plusieurs informations associées, telles que la durée de validité de la réponse, appelée TTL, qui correspond à une durée de vie au-delà de laquelle la réponse DNS est retirée du cache 14. La présence d'un tel cache 14 permet d'optimiser l'envoi des requêtes DNS pour ne pas avoir à renvoyer une requête DNS si elle correspond à une requête déjà résolue.

Ainsi, dans le cas où une réponse DNS correspondant à la requête DNS interceptée est déjà présente dans le cache 14, lesdits moyens de communication 13 avec le programme émetteur 3 transmettent audit programme émetteur 3 l'adresse IP associée audit résultat.

A l'inverse si aucune réponse DNS correspondant à ladite requête DNS interceptée n'est contenue dans le cache 14, lesdits moyens de communication 11 transmettent la requête DNS au serveur DNS 4.

Avantageusement, le serveur d'autorisation 5 peut, dans une réponse positive, introduire un paramètre de durée de vie de sorte que le programme de contrôle 1 mémorise dans son cache 14 une réponse DNS formée de l'adresse IP correspondant au nom de domaine résolu associé à une durée de vie définie par le serveur d'autorisation 5 au lieu de la durée de vie définie par le serveur DNS 4. Cette caractéristique est particulièrement intéressante dans le cas où le nom de domaine n'est pas connu du serveur 5 d'autorisation. En effet, le serveur 5 d'autorisation peut alors autoriser l'accès au nom de domaine avec une durée de vie faible, en attendant que ledit nom de domaine soit analysé.

Pendant ladite durée de vie, le serveur d'autorisation peut analyser et classifier le nom de domaine demandé et, après que ladite durée de vie est épuisée et qu'une nouvelle requête d'autorisation est demandée pour ce nom de domaine, le serveur d'autorisation apporte une réponse positive ou négative en fonction des résultats de l'analyse et de l'identifiant de l'utilisateur.

L'étape de demande d'autorisation n'est pas effectuée si la requête correspond à une requête secondaire, c'est-à-dire à une requête automatique qui ne provient pas directement d'une commande de l'utilisateur, comme expliqué ci-après.

Ledit appareil 2 et chaque serveur 4, 5 est une unité électronique et informatique qui permet d'exécuter des instructions informatiques. Lorsqu'il est précisé qu'un objet tel qu'un appareil, un serveur, ou un programme comprend des moyens pour et/ou configurés pour exécuter une action donnée cela signifie que le système électronique et informatique correspondant comprend des instructions informatiques permettant d'exécuter ladite action.

Le programme de contrôle 1 comprend des moyens d'analyse des requêtes DNS interceptées pour distinguer les requêtes, dites primaires, déclenchées par l'utilisateur de l'appareil, par rapport aux requêtes, dites secondaires, ne résultant pas d'une action directe de l'utilisateur. Lesdites requêtes secondaires correspondent à des requêtes automatiques. Ces requêtes automatiques résultent généralement de la requête principale. Lesdites requêtes secondaires sont par exemple des requêtes de publicités et/ou de statistiques générées via une page chargée en réponse à une requête principale.

Si ladite requête DNS interceptée est une requête secondaire, lesdits moyens de communication 12 avec ledit serveur d'autorisation 5 sont configurés pour ne pas émettre de requête d'autorisation, et lesdits moyens de communication 13 avec le programme émetteur 3 transmettent alors audit programme 3 l'adresse IP correspondant au nom de domaine de cette requête secondaire résolue par le serveur DNS externe 4.

La détermination des requêtes primaires par rapport aux requêtes secondaires peut être réalisée en fonction du temps écoulé entre la requête DNS analysée et la dernière commande de l'utilisateur, tel qu'une commande par clic de souris, frappe de clavier, action tactile, commande vocale, vidéo ou autre. On peut ainsi considérer qu'une requête DNS interceptée alors que l'utilisateur n'est pas actif depuis au moins une durée prédéfinie est une requête secondaire.

Ladite étape de détermination peut aussi être réalisée en fonction de l'intervalle de temps entre la requête DNS analysée et la précédente requête primaire émise par ledit programme 3 émetteur. On peut ainsi considérer que lorsque l'intervalle de temps entre une requête DNS interceptée et la dernière requête primaire associée à ce programme émetteur est inférieur à une durée prédéfinie, ladite requête DNS interceptée est une requête secondaire.

Ladite étape de détermination peut également être réalisée en fonction de la taille de la page d'accueil du nom de domaine demandé dans la requête DNS analysée. On peut ainsi considérer que, lorsque la taille de la page d'accueil du nom de domaine requis est inférieure à une taille prédéfinie, ladite requête est une requête secondaire.

Avantageusement, l'analyse d'une requête DNS interceptée prend en compte l'identité du programme émetteur, ce qui permet aux requêtes DNS issues d'une messagerie instantanée par exemple de ne pas interférer avec l'analyse des requêtes issues d'un navigateur. L'identité du programme émetteur est déterminée par une table, généralement appelée table UDP, qui permet de déterminer les connexions réseau en cours sur le protocole concerné (UDP, protocole de transport des requêtes DNS).

En particulier, on peut prévoir de considérer que toutes les requêtes issues d'un programme émetteur autre qu'un navigateur sont des requêtes primaires.

En l'absence d'émission de requête d'autorisation, du fait de la présence d'une réponse DNS correspondante dans le cache ou du fait que la requête DNS interceptée d'une requête secondaire, l'adresse IP contenue dans la réponse et/ou correspondant au nom de domaine résolu est transmise au programme émetteur 3.

Préférentiellement, si le programme de contrôle 1 ne reçoit pas de réponse du serveur d'autorisation au bout d'une durée prédéfinie, l'adresse IP associée au nom de domaine est transmise au programme émetteur 3, de sorte qu'une indisponibilité du serveur d'autorisation 5 n'empêche pas le programme émetteur 3 de fonctionner. On peut prévoir qu'en cas d'indisponibilité le serveur d'autorisation 5 ne soit réinterroger qu'au bout d'une durée prédéfinie pour ne pas surcharger le serveur d'autorisation 5 et réduire la consommation de ressources.

La présente invention n'est nullement limitée aux modes de réalisation décrits et représentés, mais l'homme du métier saura y apporter toute variante conforme à son esprit.

## Revendications

1. Système informatique de contrôle de communication, par exemple de contrôle parental, comprenant un appareil (2), tel qu'un ordinateur, muni d'un premier programme (3) informatique, tel qu'un navigateur internet, appelé programme émetteur, apte à émettre une demande d'accès à un nom de domaine à partir de laquelle est générée une requête de résolution de nom de domaine, appelée requête DNS, ledit appareil (2) étant aussi muni d'un deuxième programme (1) informatique, appelé programme de contrôle, permettant d'intercepter ladite requête DNS,
**caractérisé en ce que** ledit programme de contrôle (1) comprend :
- des moyens de communication (11) avec un serveur (4) de résolution de nom de domaine, appelé serveur DNS, configurés pour transmettre ladite requête DNS audit serveur DNS (4), et recevoir dudit serveur DNS (4) une réponse, appelée réponse DNS, qui comprend l'adresse numérique Internet, appelée adresse IP, correspondant au nom de domaine demandé,
- des moyens de communication (12) avec un autre serveur (5), appelé serveur d'autorisation, distinct dudit serveur DNS (4), configurés pour émettre audit serveur d'autorisation (5) une requête d'autorisation, distincte de la requête DNS, comprenant un identifiant (ID) de l'utilisateur de l'appareil et le nom de domaine dont la résolution est demandée, et pour recevoir une réponse dudit serveur d'autorisation (5) générée en fonction de l'identifiant (ID) de l'utilisateur de l'appareil et du nom de domaine contenus dans la requête d'autorisation,
- des moyens de communication (13) avec ledit programme émetteur (3) configurés pour transmettre audit programme émetteur (3) une adresse IP définie en fonction de la réponse générée par le serveur d'autorisation (5) où lesdits moyens de communication (13) avec ledit programme émetteur (3) sont configurés pour :
- lorsque la réponse générée par le serveur d'autorisation (5) correspond à une autorisation d'accès au nom de domaine demandé, transmettre audit programme émetteur (3) l'adresse IP contenue dans la réponse DNS générée par le serveur DNS (4),
- lorsque la réponse générée par le serveur d'autorisation (5) correspond à une interdiction d'accès au nom de domaine demandé, transmettre audit programme émetteur (3) une adresse IP autre que l'adresse IP contenue dans la réponse DNS générée par le serveur DNS (4).

2. Système selon la revendication 1, **caractérisé en ce que**, lorsque ledit programme émetteur (3) est un navigateur internet, ladite autre adresse IP transmise au navigateur internet est l'adresse IP d'une page configurée pour exécuter des instructions permettant d'afficher des informations sélectionnées en fonction de l'identifiant de l'utilisateur.

3. Système selon l'une des revendications précédentes, **caractérisé en ce que** ledit programme de contrôle (1) comprend en outre des moyens d'analyse des requêtes DNS interceptées pour distinguer les requêtes, dites primaires, déclenchées par l'utilisateur de l'appareil, des requêtes, dites secondaires, ne résultant pas d'une action directe de l'utilisateur,
et **en ce que**, si ladite requête DNS interceptée est une requête secondaire, lesdits moyens de communication (12) avec ledit serveur d'autorisation (5) sont configurés pour ne pas émettre de requête d'autorisation, et lesdits moyens de communication (13) avec le programme émetteur (3) sont configurés pour transmettre audit programme émetteur (3) l'adresse IP contenue dans la réponse DNS générée par le serveur DNS (4).

4. Système selon la revendication 3, **caractérisé en ce que** lesdits moyens d'analyse des requêtes DNS interceptées sont configurés pour distinguer les requêtes primaires des requêtes secondaires,
en fonction du temps écoulé entre la requête DNS analysée et la dernière commande de l'utilisateur,
et/ou en fonction de l'intervalle de temps entre la requête DNS analysée et la précédente requête primaire,
et/ou en fonction de la taille de la page d'accueil du nom de domaine demandé dans la requête DNS analysée.

5. Système selon l'une des revendications précédentes, **caractérisé en ce que** ledit programme de contrôle (1) comprend un cache (14) dans lequel sont mémorisées les réponses DNS correspondant auxdites requêtes DNS résolues par le serveur DNS (4),
et **en ce que**, si la réponse DNS, correspondant à la requête DNS interceptée, est déjà présente dans le cache (14), lesdits moyens de communication (13) avec le programme émetteur (3) sont configurés pour transmettre audit programme émetteur (3) l'adresse IP contenue dans ladite réponse DNS mémorisée dans le cache (14).

6. Système selon l'une des revendications précédentes, **caractérisé en ce que** lesdits moyens de communication (12) avec le serveur d'autorisation (5) sont aussi configurés pour émettre une requête d'autorisation comprenant un identifiant dudit programme émetteur (3),
et **en ce que** ledit serveur d'autorisation (5) est aussi configuré pour générer une réponse à cette requête d'autorisation en fonction de l'identifiant du programme émetteur (3).

7. Système selon l'une des revendications 1 à 6, **caractérisé en ce que**, ledit appareil (2) comprenant un agent DNS, appelé agent DNS d'origine, qui permet de générer une requête selon le protocole DNS pour demander à un serveur DNS de résoudre le nom de domaine auquel le programme émetteur (3) souhaite se connecter,
ledit programme de contrôle (1) comprend un agent de configuration qui permet de mémoriser l'adresse du serveur DNS, appelé serveur DNS d'origine, configurée dans l'agent DNS d'origine de l'appareil et de reconfigurer ledit agent DNS d'origine pour diriger les requêtes DNS vers lesdits moyens de communication (11) du programme de contrôle (1),
l'agent de configuration étant aussi programmé pour paramétrer les moyens de communication (11) du programme de contrôle (1) en définissant ledit serveur DNS d'origine comme étant le serveur DNS (4) à utiliser pour la résolution des requêtes DNS interceptées.

8. Installation comprenant un système selon l'une des revendications précédentes et un serveur d'autorisation (5) apte à transmettre au programme de contrôle (1) une réponse à la requête d'autorisation en fonction de l'identifiant (ID) de l'utilisateur de l'appareil (2) et du nom de domaine contenus dans la requête d'autorisation,
**caractérisée en ce que** ledit serveur d'autorisation (5) comprend une base de données formée de noms de domaines associés à des identifiants d'utilisateurs, et des moyens d'analyse permettant de déterminer, à partir de cette base de données, si l'accès au nom de domaine contenu dans la requête d'autorisation est autorisé pour l'identifiant d'utilisateur contenu dans ladite requête.

9. Installation selon la revendication 8, **caractérisée en ce que** le serveur (5)
d'autorisation comprend des moyens de cryptage de la réponse générée par le serveur (5) d'autorisation,
et **en ce que** lesdits moyens de communication (12) avec le serveur (5) d'autorisation comprennent des moyens de décryptage de ladite réponse.

10. Procédé de contrôle d'échange de données, par exemple de contrôle parental, entre :
- un premier programme informatique, tel qu'un navigateur internet, appelé programme émetteur, installé sur un appareil (2), tel qu'un ordinateur, et apte à émettre une demande d'accès à un nom de domaine à partir de laquelle est générée une requête de résolution de nom de domaine, appelée requête DNS,
- un serveur (4) de résolution de nom de domaine, appelé serveur DNS,
- un autre serveur (5), appelé serveur d'autorisation, distinct dudit serveur DNS (4),
**caractérisé en ce que** ledit procédé comprend les étapes suivantes :
- interception par un deuxième programme (1), appelé programme de contrôle, de ladite requête DNS,
- transfert par le programme de contrôle (1) de ladite requête DNS au serveur (4) DNS,
- réception par le programme de contrôle (1) d'une réponse DNS générée par ledit serveur (4) DNS et comprenant une adresse numérique Internet, appelée adresse IP, qui correspond au nom de domaine demandé,
- transmission par le programme de contrôle (1) audit serveur d'autorisation (5) d'une requête d'autorisation, distincte de la requête DNS, comprenant un identifiant (ID) de l'utilisateur de l'appareil (2) et le nom de domaine dont la résolution est demandée,
- réception par le programme de contrôle (1) d'une réponse générée par le serveur d'autorisation (5) en fonction de l'identifiant (ID) de l'utilisateur de l'appareil (2) et du nom de domaine contenus dans la requête d'autorisation,
- transmission par le programme de contrôle (1) audit programme émetteur (3) d'une adresse IP définie en fonction de la réponse générée par le serveur d'autorisation (5)
- lorsque la réponse générée par le serveur d'autorisation (5) correspond à une autorisation d'accès au nom de domaine demandé, l'adresse IP transmise audit programme émetteur (3) est l'adresse IP contenue dans la réponse DNS générée par le serveur DNS (4),
- lorsque la réponse générée par le serveur d'autorisation (5) correspond à une interdiction d'accès au nom de domaine demandé, l'adresse IP transmise audit programme émetteur (3) est une adresse IP autre que l'adresse IP contenue dans la réponse DNS générée par le serveur DNS (4).

11. Procédé selon la revendication 10, **caractérisé en ce que** le contenu de la réponse du serveur d'autorisation (5) dépend d'une étape d'analyse qui détermine si l'accès au nom de domaine contenu dans la requête d'autorisation est autorisé pour l'identifiant d'utilisateur contenu dans ladite requête d'autorisation.

12. Procédé selon l'une des revendications 10 à 11, **caractérisé en ce qu'**il comprend une étape d'analyse des requêtes DNS interceptées pour distinguer les requêtes, dites primaires, déclenchées par l'utilisateur, des requêtes, dites secondaires, ne résultant pas d'une action directe de l'utilisateur,
et **en ce que**, si ladite requête DNS analysée est une requête secondaire, aucune requête d'autorisation associée à cette requête secondaire n'est émise, et l'adresse IP contenue dans la réponse DNS générée par le serveur (4) DNS est transmise audit programme émetteur (3).

13. Procédé selon l'une des revendications 10 à 12, **caractérisé en ce que**, ledit appareil (2) comprenant un agent DNS, appelé agent DNS d'origine, qui permet de générer une requête selon le protocole DNS pour demander à un serveur DNS de résoudre le nom de domaine auquel le programme émetteur (3) souhaite se connecter,
ledit programme de contrôle (1) comprend un agent de configuration qui mémorise l'adresse du serveur DNS, appelé serveur DNS d'origine, configurée dans l'agent DNS d'origine de l'appareil et reconfigure ledit agent DNS d'origine pour diriger les requêtes DNS vers lesdits moyens de communication (11) du programme de contrôle (1),
l'agent de configuration paramétrant aussi les moyens de communication (11) du programme de contrôle (1) en définissant ledit serveur DNS d'origine comme étant le serveur DNS (4) à utiliser pour la résolution des requêtes DNS interceptées.

14. Programme d'ordinateur, par exemple pour le contrôle parental, comprenant des instructions de code de programme pour l'exécution des étapes du procédé selon l'une des revendications 10 à 13 lorsque ledit programme est exécuté sur un ordinateur.

## Patentansprüche

1. EDV-System zur Kommunikationssteuerung, beispielsweise für den Jugendschutz, umfassend ein Gerät (2) wie ein Rechner, ausgestattet mit einem ersten EDV-Programm (3) wie ein Internetbrowser, als sendendes Programm bezeichnet, das imstande ist, eine Zugriffsanfrage an einen Domainnamen zu senden, die eine Domainnamen-Auflösungsabfrage, als DNS-Abfrage bezeichnet, generiert, wobei das Gerät (2) ebenfalls mit einem zweiten EDV-Protokoll (1), als Steuerprogramm bezeichnet, ausgestattet ist, das erlaubt, die DNS-Abfrage abzufangen,
**dadurch gekennzeichnet, dass** das Steuerprogramm (1) umfasst:
- Kommunikationsmittel (11) mit einem Domainnamen-Auflösungsserver (4), als DNS-Server bezeichnet, die konfiguriert sind, um die DNS-Abfrage an den DNS-Server (4) zu übertragen und von dem DNS-Server (4) eine Antwort, als DNS-Antwort bezeichnet, zu erhalten, welche die Internetadresse, als IP-Adresse bezeichnet, umfasst, die dem angefragten Domainnamen entspricht,
- Kommunikationsmittel (12) einem anderen Server (5), als Autorisierungsserver bezeichnet, der sich vom DNS-Server (4) unterscheidet, die konfiguriert sind, um an den Autorisierungsserver (5) eine Autorisierungsabfrage zu senden, die sich von der DNS-Abfrage unterscheidet, umfassend eine Kennung (ID) des Benutzers des Geräts und den Domainnamen, dessen Auflösung gefordert wird, und um eine Antwort des Autorisierungsservers (5) zu erhalten, die in Abhängigkeit von der Kennung (ID) des Benutzers des Geräts und vom Domainnamen, die in der Autorisierungsabfrage enthalten sind, generiert wird,
- Kommunikationsmittel (13) mit dem sendenden Programm (3), die konfiguriert sind, um an das sendende Programm (3) eine IP-Adresse zu senden, die in Abhängigkeit von der von dem Autorisierungsserver (5) generierten Antwort festgelegt wird,
wobei die Kommunikationsmittel (13) mit dem sendenden Programm (3) konfiguriert sind, um:
- wenn die von dem Autorisierungsserver (5) generierte Antwort einer Zugriffsgenehmigung auf den verlangten Domainnamen entspricht, an das sendende Programm (3) die IP-Adresse zu übertragen, die in der von dem DNS-Server (4) generierten DNS-Antwort enthalten ist,
- wenn die von dem Autorisierungsserver (5) generierte Antwort einem Zugriffsverbot auf den verlangten Domainnamen entspricht, an das sendende Programm (3) eine andere IP-Adresse als die IP-Adresse zu übertragen, die in der von dem DNS-Server (4) generierten DNS-Antwort enthalten ist.

2. System nach Anspruch 1, **dadurch gekennzeichnet, dass**, wenn das sendende Programm (3) ein Internetbrowser ist, die an den Internetbrowser übertragene andere IP-Adresse die IP-Adresse einer Seite ist, die konfiguriert ist, um Befehle auszuführen, die erlauben, in Abhängigkeit von der Kennung des Benutzers ausgewählte Informationen anzuzeigen.

3. System nach einem der vorangehenden Ansprüche, **dadurch gekennzeichnet, dass** das Steuerprogramm (1) ferner Analysemittel der abgefangenen DNS-Abfragen umfasst, um primäre Abfragen, die von dem Benutzer des Geräts ausgelöst wurden, von sekundären Abfragen, die kein Ergebnis einer direkten Aktion des Benutzers sind, zu unterscheiden,
und dass, wenn die abgefangene DNS-Abfrage eine sekundäre Abfrage ist, die Kommunikationsmittel (12) mit dem Autorisierungsserver (5) konfiguriert sind, um keine Autorisierungsabfrage zu senden, und die Kommunikationsmittel (13) mit dem sendenden Programm (3) konfiguriert sind, um an das sendende Programm (3) die IP-Adresse zu übertragen, die in der von dem DNS-Server (4) generierten DNS-Antwort enthalten ist.

4. System nach Anspruch 3, **dadurch gekennzeichnet, dass** die Analysemittel der abgefangenen DNS-Abfragen konfiguriert sind, um die primären Abfragen von den sekundären Abfragen zu unterscheiden,
in Abhängigkeit von der zwischen der analysierten DNS-Abfrage und dem letzten Befehl des Benutzers vergangenen Zeit,
und/oder in Abhängigkeit vom Zeitintervall zwischen der analysierten DNS-Abfrage und der vorangegangenen primären Abfrage,
und/oder in Abhängigkeit von der Größe der Startseite des in der analysierten DNS-Abfrage verlangten Domainnamens.

5. System nach einem der vorangehenden Ansprüche, **dadurch gekennzeichnet, dass** das Steuerprogramm (1) einen Cache (14) umfasst, in dem die entsprechenden DNS-Antworten auf die von dem DNS-Server (4) aufgelösten DNS-Abfragen enthalten sind,
und dass, wenn die DNS-Antwort, die der abgefangenen DNS-Abfrage entspricht, bereits im Cache (14) vorhanden ist, die Kommunikationsmittel (13) mit dem sendenden Programm (3) konfiguriert sind, um an das sendende Programm (3) die IP-Adresse zu übertragen, die in der im Cache (14) gespeicherten DNS-Antwort enthalten ist.

6. System nach einem der vorangehenden Ansprüche, **dadurch gekennzeichnet, dass** die Kommunikationsmittel (12) mit dem Autorisierungsserver (5) auch konfiguriert sind, um eine Autorisierungsabfrage zu senden, die eine Kennung des sendenden Programms (3) umfasst,
und dass der Autorisierungsserver (5) auch konfiguriert ist, um eine Antwort auf diese Autorisierungsabfrage in Abhängigkeit von der Kennung des sendenden Programms (3) zu generieren.

7. System nach einem der Ansprüche 1 bis 6, **dadurch gekennzeichnet, dass**, wobei das Gerät (2) einen DNS-Agenten, als DNS-Ursprungsagent bezeichnet, umfasst, der erlaubt, eine Abfrage gemäß dem DNS-Protokoll zu generieren, um von einem DNS-Server die Auflösung des Domainnamens zu verlangen, mit dem sich das sendende Programm (3) verbinden möchte,
das Steuerprogramm (1) einen Konfigurationsagenten umfasst, der erlaubt, die Adresse des DNS-Servers, als DNS-Ursprungsserver bezeichnet, zu speichern, die im DNS-Ursprungsagenten des Geräts konfiguriert ist und den DNS-Ursprungsagenten neu zu konfigurieren, um die DNS-Abfragen zu den Kommunikationsmitteln (11) des Steuerprogramms (1) zu lenken,
wobei der Konfigurationsagent ebenfalls programmiert ist, um die Kommunikationsmittel (11) des Steuerprogramms (1) durch Definition des DNS-Ursprungsservers als den DNS-Server (4) festzulegen, der für die Auflösung der abgefangenen DNS-Abfragen zu verwenden ist.

8. Anlage, umfassend ein System nach einem der vorangehenden Ansprüche und einen Autorisierungsserver (5), der imstande ist, an das Steuerprogramm (1) eine Antwort auf die Autorisierungsabfrage in Abhängigkeit von der Kennung (ID) des Benutzers des Geräts (2) und dem Domainnamen, die in der Autorisierungsabfrage enthalten sind, zu übertragen,
**dadurch gekennzeichnet, dass** der Autorisierungsserver (5) eine Datenbank umfasst, die von Benutzerkennungen zugeordneten Domainnamen gebildet ist, und Analysemittel, die ausgehend von dieser Datenbank erlauben zu bestimmen, ob der Zugriff auf den in der Autorisierungsabfrage enthaltenen Domainnamen für die in der Abfrage enthaltene Benutzerkennung erlaubt ist.

9. Anlage nach Anspruch 9, **dadurch gekennzeichnet, dass** der Autorisierungsserver (5) Verschlüsselungsmittel der von dem Autorisierungsserver (5) generierten Antwort umfasst,
und dass die Kommunikationsmittel (12) mit dem Autorisierungsserver (5) Entschlüsselungsmittel der Antwort umfassen.

10. Verfahren für die Steuerung von Datenaustausch, beispielsweise Jugendschutz, zwischen:
- einem ersten EDV-Programm wie ein Internetbrowser, als sendendes Programm bezeichnet, das auf einem Gerät (2) wie ein Rechner installiert ist und das imstande ist, eine Zugriffsanfrage an einen Domainnamen zu senden, die eine Domainnamen-Auflösungsabfrage, als DNS-Abfrage bezeichnet, generiert,
- einem Domainnamen-Auflösungsserver (4), als DNS-Server bezeichnet,
- einem anderen Server (5), als Autorisierungsserver bezeichnet, der sich von dem DNS-Server (4) unterscheidet,
**dadurch gekennzeichnet, dass** das Verfahren die folgenden Schritte umfasst:
- Abfangen von einem zweiten Programm (1), als Steuerprogramm bezeichnet, der DNS-Abfrage,
- Übertragen von dem Steuerprogramm (1) der DNS-Abfrage an den DNS-Server (4),
- Empfangen von dem Steuerprogramm (1) einer DNS-Antwort, die von dem DNS-Server (4) generiert wird und umfassend eine digitale Internetadresse, als IP-Adresse bezeichnet, die dem angefragten Domainnamen entspricht,
- Übertragen von dem Steuerprogramm (1) an den Autorisierungsserver (5) einer Autorisierungsabfrage, die sich von der DNS-Abfrage unterscheidet, umfassend eine Kennung (ID) des Benutzers des Geräts (2) und den Domainnamen, dessen Auflösung gefordert wird,
- Empfangen von dem Steuerprogramm (1) einer von dem Autorisierungsserver (5) in Abhängigkeit von der Kennung (ID) des Benutzers des Geräts (2) und dem Domainnamen, die in der Autorisierungsabfrage enthalten sind, generierten Antwort,
- Übertragen von dem Steuerprogramm (1) an das sendende Programm (3) einer IP-Adresse, die in Abhängigkeit von der von dem Autorisierungsserver (5) generierten Antwort festgelegt wird,
- wenn die von dem Autorisierungsserver (5) generierte Antwort einer Zugriffsgenehmigung auf den verlangten Domainnamen entspricht, ist die an das sendende Programm (3) übertragene IP-Adresse die IP-Adresse, die in der von dem DNS-Server (4) generierten DNS-Antwort enthalten ist,
- wenn die von dem Autorisierungsserver (5) generierte Antwort einem Zugriffsverbot auf den verlangten Domainnamen entspricht, ist die an das sendende Programm (3) übertragene IP-Adresse eine andere IP-Adresse als die IP-Adresse, die in der von dem DNS-Server (4) generierten DNS-Antwort enthalten ist.

11. Verfahren nach Anspruch 11, **dadurch gekennzeichnet, dass** der Inhalt der Antwort des Autorisierungsservers (5) von einem Analyseschritt abhängt, der bestimmt, ob der Zugriff auf den in der Autorisierungsabfrage enthaltenen Domainnamen für die in der Autorisierungsabfrage enthaltenen Benutzerkennung erlaubt ist.

12. Verfahren nach einem der Ansprüche 10 bis 11, **dadurch gekennzeichnet, dass** es einen Analyseschritt der abgefangenen DNS-Abfragen umfasst, um die primären Abfragen, von dem Benutzer ausgelösten Abfragen von sekundären Abfragen, die kein Ergebnis einer direkten Aktion des Benutzers sind, zu unterscheiden,
und dass, wenn die analysierte DNS-Abfrage eine sekundäre Abfrage ist, keine dieser sekundären Abfrage zugeordnete Autorisierungsabfrage gesendet wird, und die IP-Adresse, die in der von dem DNS-Server (4) generierten DNS-Antwort enthalten ist, an das sendende Programm (3) übertragen wird.

13. Verfahren nach einem der Ansprüche 10 bis 12, **dadurch gekennzeichnet, dass**, wobei das Gerät (2) einen DNS-Agenten, als DNS-Ursprungsagent bezeichnet, umfasst, der erlaubt, eine Abfrage gemäß dem DNS-Protokoll zu generieren, um von einem DNS-Server zu verlangen, den Domainnamen aufzulösen, mit dem sich das sendende Programm (3) verbinden möchten,
das Steuerprogramm (1) einen Konfigurationsagenten umfasst, der die Adresse des DNS-Servers, als DNS-Ursprungsserver bezeichnet, speichert, die im DNS-Ursprungsagenten des Geräts konfiguriert ist und den DNS-Ursprungsagenten neu konfiguriert, um die DNS-Abfragen zu den Kommunikationsmitteln (11) des Steuerprogramms (1) zu lenken,
wobei der Konfigurationsagent ebenfalls die Kommunikationsmittel (11) des Steuerprogramms (1) durch Festlegen des DNS-Ursprungsservers als den DNS-Server (4) parametriert, der für die Auflösung der abgefangenen DNS-Abfragen zu verwenden ist.

14. Rechnerprogramm, beispielsweise für den Jugendschutz, umfassend Programmcodebefehle für die Durchführung der Schritte des Verfahrens nach einem der Ansprüche 10 bis 13, wenn das Programm auf einem Rechner ausgeführt wird.

## Claims

1. A computerized communication control system, for example for parental control, comprising an apparatus (2), such as a computer, provided with a first computer program (3), such as an Internet browser, called transmitting program, able to send a request to access a domain name from which a domain name resolution request, called DNS request, is generated, said apparatus (2) also being provided with a second computer program (1), called control program, making it possible to intercept said DNS request, **characterized in that** said control program (1) comprises:
- communication means (11) for communicating with a domain name resolution server (4), called DNS server, configured to send said DNS request to said DNS server (4), and to receive a response, called DNS response, from said DNS server (4), which comprises the Internet protocol address, called IP address, corresponding to the requested domain name,
- communication means (12) for communicating with another server (5), called authorization server, separate from said DNS server (4), configured to send said authorization server (5) an authorization request, separate from the DNS request, comprising an identifier (ID) of the user of the apparatus and the domain name whereof resolution is requested, and to receive a response from said authorization server (5) generated as a function of the identifier (ID) of the user of the apparatus and the domain name that are contained in the authorization request,
- communication means (13) for communicating with said transmitting program (3) configured to send said transmitting program (3) an IP address defined as a function of the response generated by the authorization server (5),
where said communication means (13) for communicating with said transmitting program (3) are configured to:
- when the response generated by the authorization server (5) corresponds to an authorization to access the requested domain name, send said transmitting program (3) the IP address contained in the DNS response generated by the DNS server (4),
- when the response generated by the authorization server (5) corresponds to a prohibition to access the requested domain name, send said transmitting program (3) an IP address other than the IP address contained in the DNS response generated by the DNS server (4).

2. The system according to claim 1, **characterized in that**, when said transmitting program (3) is an Internet browser, said other IP address sent to the Internet browser is the IP address of a page configured to execute instructions making it possible to display information selected based on the user's identifier.

3. The system according to one of the preceding claims, **characterized in that** said control program (1) further comprises means for analyzing intercepted DNS requests to distinguish the so-called primary requests, initiated by the user of the apparatus, from the so-called secondary requests, not resulting from a direct action by the user,
and **in that**, if said intercepted DNS request is a secondary request, said communication means (12) for communicating with said authorization server (5) are configured not to send an authorization request, and said communication means (13) communicating with the transmitting program (3) are configured to send said transmitting program (3) the IP address contained in the DNS response generated by the DNS server (4).

4. The system according to claim 3, **characterized in that** said means for analyzing the intercepted DNS requests are configured to distinguish the primary requests from the secondary requests,
based on the time elapsed between the analyzed DNS request and the last command from the user,
and/or based on the time interval between the analyzed DNS request and the preceding primary request,
and/or based on the size of the homepage of the domain name requested in the analyzed DNS request.

5. The system according to one of the preceding claims, **characterized in that** said control program (1) comprises a cache (14) in which the DNS responses are stored corresponding to said DNS requests resolved by the DNS server (4),
and **in that**, if the DNS request, corresponding to the intercepted DNS request, is already present in the cache (14), said communication means (13) communicating with the transmitting program (3) are configured to send said transmitting program (3) the IP address contained in said DNS response stored in the cache (14).

6. The system according to one of the preceding claims, **characterized in that** said communication means (12) communicating with the authorization server (5) are also configured to send an authorization request comprising an identifier of said transmitting program (3),
and **in that** said authorization server (5) is also configured to generate a response to this authorization request based on the identifier of the transmitting program (3).

7. The system according to one of claims 1 to 6, **characterized in that**, said apparatus (2) comprising a DNS agent, called original DNS agent, which makes it possible to generate a request according to the DNS protocol to ask a DNS server to resolve the domain name to which the transmitting program (3) wishes to connect,
said control program (1) comprises a configuration agent that makes it possible to store the address of the DNS server, called original DNS server, configured in the original DNS agent of the apparatus and to reconfigure said original DNS agent to direct the DNS request toward the communication means (11) of the control program (1),
the configuration agent also being programmed to configure the communication means (11) of the control program (1) by defining said original DNS server as being the DNS server (4) to be used to resolve the intercepted DNS requests.

8. A facility comprising a system according to one of the preceding claims and an authorization server (5) able to send the control program (1) a response to the authorization request based on the identifier (ID) of the user of the apparatus (2) and the domain name that are contained in the authorization request,
**characterized in that** said authorization server (5) comprises a database made up of domain names associated with user identifiers, and analysis means making it possible to determine, from this database, whether access to the domain name contained in the authorization request is authorized for the user identifier contained in said request.

9. The facility according to claim 8, **characterized in that** the authorization server (5) comprises means for encrypting the response generated by the authorization server (5), and **in that** said communication means (12) communicating with the authorization server (5) comprise means for decrypting said response.

10. A method for controlling data exchanges, for example for parental control, between:
- a first computer program, such as an Internet browser, called transmitting program, installed on an apparatus (2), such as a computer, and able to send a request to access a domain name from which a domain name resolution request is generated, called DNS request,
- a domain name resolution server (4), called DNS server,
- another server (5), called authorization server, separate from said DNS server (4), **characterized in that** said method comprises the following steps:
- interception, by a second program (1), called control program, of said DNS request,
- transfer, by the control program (1), of said DNS request to the DNS server (4),
- reception, by the control program (1), of a DNS response generated by said DNS server (4) comprising an Internet protocol address, called IP address, that corresponds to the requested domain name,
- transmission, by the control program (1) to said authorization server (5), of an authorization request, separate from the DNS request, comprising an identifier (ID) of the user of the apparatus (2) and the domain name whereof resolution is requested,
- reception, by the control program (1), of a response generated by the authorization server (5) based on the identifier (ID) of the user of the apparatus (2) and the domain name that are contained in the authorization request,
- transmission, by the control program (1) to said transmitting program (3), of an IP address defined as a function of the response generated by the authorization server (5),
- when the response generated by the authorization server (5) corresponds to authorization to access the requested domain name, the IP address sent to said transmitting program (3) is the IP address contained in the DNS response generated by the DNS server (4),
- when the response generated by the authorization server (5) corresponds to a prohibition to access the requested domain name, the IP address sent to said transmitting program (3) is an IP address other than the IP address contained in the DNS response generated by the DNS server (4).

11. The method according to claim 10, **characterized in that** the content of the response from the authorization server (5) depends on an analysis step that determines whether the access to the domain name contained in the authorization request is authorized for the user identifier contained in said authorization request.

12. The method according to one of claims 10 to 11, **characterized in that** it comprises a step for analyzing the intercepted DNS requests to distinguish the so-called primary requests, initiated by the user, from the so-called secondary requests, which do not result from a direct action by the user,
and **in that**, if said analyzed DNS request is a secondary request, no authorization request associated with the secondary request is sent, and the IP address contained in the DNS response generated by the DNS server (4) is sent to said transmitting program (3).

13. The method according to one of claims 10 to 12, **characterized in that**,
said apparatus (2) comprising a DNS agent, called original DNS agent, which makes it possible to generate a request according to the DNS protocol to ask a DNS server to resolve the domain name to which the transmitting program (3) wishes to connect,
said control program (1) comprises a configuration agent that stores the address of the DNS server, called original DNS server, configured in the original DNS agent of the apparatus and reconfigures said original DNS agent to direct the DNS requests to said communication means (11) of the control program (1),
the configuration agent also configuring the communication means (11) of the control program (1) by defining said original DNS server as the DNS server (4) to be used to resolve the intercepted DNS requests.

14. A computer program, for example for parental control, comprising program code instructions for carrying out the steps of the method according to one of claims 10 to 13 when said program is run on a computer.
